# EUROPEAN PATENT SPECIFICATION

(11) **EP 0 465 830 B1**
(45) Date of publication and mention of the grant of the patent: **25.01.1995**
(21) Application number: 91109251.8
(22) Date of filing: 06.06.1991
(51) Int. Cl.: C09D 183/04, B67B 1/03, B27K 7/00

(54) **Inert and non toxic surface coating for hot and cold lubrification and plasticization of cork stoppers**
Inerte und nichttoxische Beschichtung für Korken die einen schmierenden und plastifizierenden Effekt haben
Revêtement inerte et non-toxique pour bouchons en liège ayant un effet de lubrification et de plastification

(30) Priority: 11.07.1990 IT 1248490
(43) Date of publication of application: 15.01.1992
(73) Proprietor: LA TECNOCHIMICA S.r.l., 10143 Torino (IT)
(72) Inventor: Mestrallet, Ugo, I-10143 Torino (IT)
(74) Representative: Ferrarotti, Giovanni

(56) References cited:
- EP-A- 0 058 239
- EP-A- 0 169 098
- EP-A- 0 277 603
- EP-A- 0 351 503
- EP-A- 0 364 375

## Description

This invention covers a surface coating for cork stoppers and is consisting of an emulsion with a lubricating and plastifying action that can be either hot or cold applied, without distinction.

It is well known that many drinks, especially wine, are kept and marketed in cork stoppered bottles.

To facilitate plugging and removal of the corks as well as a perfect seal and organoleptic preservation of the product, these cork stoppers are usually coated with a sealant and lubricant.

In the past, hydrocarbon-based products such as paraffin and vaseline were used for this lubrication and sealing, which were suitable until the pasteurization method was adopted having the aim to prevent the product from fermenting after bottling.

It is well known that this pasteurization temperature ranges between 50° and 100°C according to the products to be processed, so that the utilization of paraffin and vaseline which have a melting temperature of about 40°C, caused the lubricant to melt, dripping into the bottle with unpleasant consequences for its contents from aesthetic and organoleptic viewpoint.

Pure silicone oil was also used to lubricate the stoppers, since this oil remains unaltered during pasteurization, but it was found that this oil could not be used since it impregnates the stopper because of its low surface tension and then seeps into the bottle. The cork is also difficult to remove, especially at low temperatures.

All these drawbacks due to lubrication of the stoppers with paraffin, vaseline or pure silicone oil were eliminated by the Italian Patent N. 1.217.013 and the corresponding European Patent N. 0 277 603, when using a silicone grease for lubrication of the corks, i.e. a homogeneous and stable emulsion of silicone oil and a thickener, the silicone oil being represented by a dimethylsilicone whereas an atomized amorphous silica gel and/or metal salt stearate (lithium) is used as a thickening agent, both products being chemically inert and non toxic.

This known solution eliminates the drawbacks of conventional lubricants used for cork stoppers, especially the trouble caused by pure silicone oil.

It is also known as prior art in the lubrication of the corks EP-A-0351503, which foresees the addition to the silicone grease clarified in the above mentioned EP-A-0277603, of bleaching products as kaolins, talcums and white pigments. Therefore according EP-A-0351503 it is obtained a contemporary lubrication and bleaching of the corks, with saving of time and simplification of the working schedule in regard to the known bleaching working executed indipendently from the lubrication working.

Besides in the field of the covering of products, included wood and cork, it is known EP-A-0058239, which foresees an aqueous emulsion of polysiloxans with a catalyst.

It is also known EP-A-0364375 which foresees an aqueous dispersion of silicone with a non-silicone mineral, with an oxylane product and with a hardening catalyst.

Finally in EP-A-0169098 it is described an aqueous emulsion used for non-adhesive and waterproof treatments.

On the other hand, plasticization of stoppers is also known, by which the stopper is hot coated with a polymerized plastic substance with the aid of solvents.

Hot plasticization with the aid of solvents requires lubrication of the plastic coated stopper surface prior to bottling, since the plastic film prevents the cork from smoothly slipping into the bottle neck.

Such plasticized corks provide for excellent seals but they are rather expensive because of the plasticization and subsequent lubrication process so that they won't be used for products having a low market value (e.g. a low alcohol content).

This invention has the aim to combine the advantages of a silicone grease based lubricant with those of the plasticization process so as to obtain at the same time a low-cost product for lubrication and plasticization of cork stoppers of any type.

According to this invention, this product is an emulsion of silicone grease to which a finely powdered plastic polymer is added, this emulsion being obtained without any solvents.

This perfectly homogenous emulsion provides for a well balanced synergic lubrication and plasticization, without hot processing with solvents and without requiring differentiated plasticization and lubrication treatments.

Obviously, since this product comes in touch with food, its constituents shall have high purity characteristics and shall be non toxic in compliance with national and international legislations.

This product is therefore non toxic, tasteless, chemically and physically inert, water repellent, thermostable between -75° and +300°C; it has an amorphous molecular structure and a viscosity value which prevents its dripping or seepage during hot and cold bottling as well as during the pasteurization stage, while preventing bottle/cork seizure during cold storage of the bottles.

The benefits deriving from the utilization of this lubricating-plasticizing compound for cork coating can be summarized as follows:
- simple processing of the stoppers in normal open or closed tumblers without need for subsequent multiple technical actions;
- the stoppers are provided with a dual lubricating/plastifying protection in one single operation;
- the cork stoppers can thus perfectly withstand moisture absorption because of the plasticizing component and can be easily slipped into the bottle due to the combined plasticizing and lubricating action;
- the composition of the compound can be easily varied based upon process control and on the type of cork which is used for the stoppers;
- the coated corks, whether loose or fitted into the bottles, will not be subject to ageing;
- the bottled products will maintain their original organoleptic characteristics.

The lubricating and plasticizing product subject matter of this invention has the following indicatory composition in weight:

| | |
|---|---|
| - dimethylsilicone fluid | 50-60% |
| - thickening agent for the silicone fluid such as silicia gel and/or a metal salt stearate (lithium) | 15-10% |
| - finely powdered plastic polymer such as tetrafluorethylene (TFE) | 30% |
| - pigments such as titanium or iron dioxide | 5-0% |

The product in question is obtained in a turbomixer equipped with a refluxing filter system. It is a white cream cold or hot applied to the cork surface. Usually and as a guide, about 220 - 300 gr of the product is required to coat 10.000 32x54 mm corks kept in a normal open or closed tumblers rotating at the speed of 15-20 r.p.m.

It is particularly important that the stoppers can be either hot or cold coated. If the corks are cold, they can be cold processed, but when they are warm from previous operations (such as for instance bleaching), the stoppers may be hot coated since the emulsion remains perfectly stable during temperature variations.

It is clear that the above composition of the emulsion may vary in percentage according to needs and to the type of cork used for stoppering. In particular, the silicone fluid and thickener ratios may be changed to obtain a more or less dense emulsion having the required viscosity value.

The product in question with or without pigments may have a dull or translucid appearance and its colour may range between white and cork-brown.

## Claims

1. Inert, non toxic surface coating for cork stoppers, usually coated with vaseline, paraffin, silicone fluid or grease, or hot coated with a polymerized plastic substance with the aid of a solvent, **characterized** by that this coating is a stable and homogeneous solventless emulsion consisting of:
| | |
|---|---|
| - Dimethylsilicone based fluid | 50-60% in weight |
| - Thickening agents such as silicia gel and/or metal salt stearate | 10-15% in weight |
| - Finely powdered plastic polymer such as tetrafluoroethylene | 30% in weight |
| - Pigments such as titanium or iron dioxide | 5-0% in weight |
wherein this emulsion is obtained in a turbomixer fitted with a refluxing filter system with more or less dense consistency based upon the silicone fluid/thickener weight ratio and may take on a mat, translucid and different coloured apparence based upon the amount of added pigments.

2. Utilization of the coating emulsion according to claim 1, **characterized** by that this coating emulsion is either hot or cold applied on the cork stoppers in rotary tumblers, so that the cork stoppers are lubricated and plasticized at the same time in a single operation.

## Patentansprüche

1. Inerte, nicht toxische Oberflächenbeschichtung für Korken, die üblicherweise mit Vaselin, Paraffin, Silikonfluid oder Fett beschichtet werden oder mit einer polymerisierten Kunststoffsubstanz mit Hilfe eines Lösungsmittels warm beschichtet werden, dadurch gekennzeichnet, daß diese Beschichtung eine stabile und homogene, lösungsmittellose Emulsion ist, bestehend aus:
| | |
|---|---|
| - Fluid auf Dimethylsilikonbasis | 50-60 Gew.-% |
| - Verdickungsmittel wie Silikagel und/oder Metallsalzstearat | 15-10 Gew.-% |
| - fein pulverisiertes Kunststoffpolymer wie Tetrafluoroethylen | 30 Gew.-% |
| - Pigmente wie Titan oder Eisendioxid | 5-0 Gew.-% |
worin diese Emulsion in einem Turbomischer erhalten wird, der mit einem Rückfluß-Filtersystem ausgestattet ist, mit einer mehr oder weniger dichten Konsistenz, beruhend auf dem Silikonfluid/Verdickungsmittel-Gewichtsverhältnis, und ein mattes, durchscheinendes und verschiedenfärbiges Aussehen aufgrund der Menge an zugefügten Pigmenten erhalten kann.

2. Verwendung der Beschichtungsemulsion nach Anspruch 1, dadurch gekennzeichnet, daß diese Beschichtungsemulsion entweder warm oder kalt auf die Korken in Drehtrommeln aufgetragen wird, so daß die Korken gleichzeitig in einem Arbeitsgang geschmiert und plastifiziert werden.

## Revendications

1. Revêtement de surface inerte et non toxique pour bouchons en liège habituellement revêtus de vaseline, de paraffine, de fluide ou de graisse de silicone, ou enduits à chaud à l'aide d'un solvant avec une substance plastique polymèrisée ,
**caractérisé en ce que** ce revêtement est une émulsion stable et homogène sans solvant se composant de:
| | |
|---|---|
| - fluide de silicone diméthylique | 50-60% |
| - agent épaississant pour le fluide de silicone tel que le silicagel et/ou un stéarate de sel métallique (lithium) | 15-10% |
| - polymère plastique finement pulvérisé tel que le tétrafluoréthylène (TFE) | 30% |
| - pigments tels que le dioxyde de fer ou le blanc de titane | 5-0%, |
cette émulsion étant obtenue dans un agitateur turbinaire pourvu d'un système de filtre à refluement, et présentant une consistence plus ou moins dense en fonction du rapport en poids fluide de silicone/épaississant et pouvant prendre une apparence matte, translucide ou de différentes couleurs en fonction de la quantité de pigments ajoutés.

2. Utilisation de l'émulsion de revêtement selon la revendication 1, **caractérisée en ce que** cette émulsion de revêtement est appliquée à froid ou à chaud sur les bouchons en liège dans des tambours rotatifs, de manière à ce que les bouchons en liège soient lubrifiés et plastifiés en même temps, en une seule opération.
